Europäisches Patentamt

European Patent Office

Office européen des brevets

(19)

(11) Veröffentlichungsnummer: **0 211 803**
**B1**

(12) EUROPÄISCHE PATENTSCHRIFT

(45) Veröffentlichungstag der Patentschrift: **13.06.90**

(51) Int. Cl.⁵: **G 02 B 17/08**

(21) Anmeldenummer: **86810316.9**

(22) Anmeldetag: **15.07.86**

(54) **Vorrichtung mit einem telezentrischen, F-Theta-korrigierten Objektiv für kontaktloses Messen und Verwendung dieser Vorrichtung.**

(30) Priorität: **24.07.85 CH 3219/85**

(43) Veröffentlichungstag der Anmeldung:
**25.02.87 Patentblatt 87/09**

(45) Bekanntmachung des Hinweises auf die
Patenterteilung:
**13.06.90 Patentblatt 90/24**

(84) Benannte Vertragsstaaten:
**AT BE DE FR GB IT NL SE**

(56) Entgegenhaltungen:
**AT-B- 365 787**
**DE-A-1 497 574**
**DE-A-2 532 578**
**DE-A-3 033 377**
**DE-C- 967 578**
**FR-A-2 339 873**
**US-A-3 547 525**
**US-A-3 700 310**
**US-A-4 074 938**
**US-A-4 168 126**
**US-A-4 400 063**

(73) Patentinhaber: **ZUMBACH ELECTRONIC AG**
**Hauptstrasse 93**
**CH-2552 Orpund (CH)**

(72) Erfinder: **Blandford, Brian c/o Zumbach**
**Electronic AG**
**Hauptstrasse 93**
**CH-2552 Orpund (CH)**

(74) Vertreter: **Jaeger, Klaus, Dr. et al**
**Jaeger & Partner Patentanwälte Pippinplatz 4a**
**D-8035 München-Gauting (DE)**

## EP 0 211 803 B1

**Beschreibung**

Die Erfindung betrifft ein Längenmeßgerät zur eindimensionalen optischen Abtastung eines zu vermessenden Prüflings der im Oberbegriff des Patentanspruchs 1 genannten Art.

Für optische Geräte dieser Art ist eine möglichst gute F-θ-Korrektur erforderlich. Dies bedeutet, daß bis zu relativ großen Eintrittswinkeln θ die Höhe des Mittelstrahls des aus dem Objektiv austretenden Taststrahls im Bildraum eine möglichst genaue lineare Funktion des Ablenkwinkels des Eintrittsstrahls ist.

Um bei dieser Anforderung an das Längenmeßgerät die nutzbare Tastvorhangshöhe zu vergrößern, müssen vergleichsweise große und sehr große und zentral entsprechend dicke Austrittslinsen für solche F-θ-korrigierten Objektive mit vergleichsweise hohem Tastvorhang verwendet werden. Die Objektive werden dadurch groß, vergleichsweise sehr schwer und schließlich wegen des hohen optischen Aufwandes auch extrem teuer.

Aus der US—A—4 400 063 ist ein Flachbettscanner für die Abtastung graphischer Zeichen auf einem Blatt Papier bekannt, bei dem dieses Problem der optisch und herstellungstechnisch aufwendigen Objektive durch die Aufgabe eines telezentrischen Strahlenganges approximiert. Dabei wird unter einem "telezentrischen Strahlengang" im üblichen Verständnis ein Strahlengang innerhalb eines optischen Instrumentes verstanden, bei dem die zu jedem Bildpunkt gehörigen Strahlen an anderer Stelle des Gerätes parallel zueinander verlaufen.

Aus der deutschen Patentschrift DE—A—967 578 ist eine lichtelektrische Schrankte bekannt, bei der zur Erfüllung der an solche Geräte gestellten nur mäßig hohen optischen Anforderungen das "Objektiv" lediglich eine Sammellinse oder einen Hohlspiegel aufweist. Eine Vergrößerung der Tasthöhe dieser Lichtschranke würde also eine Vergrößerung des Hohlspiegels oder der Linse erfordern und damit zu den bereits in der vorstehend erläuterten amerikanischen Patentschrift angesprochenen Problemen führen.

Ausgehend von diesem Stand der Technik liegt der Erfindung die Aufgabe zugrunde, ein Präzisionslängenmeßgerät zum berührungslosen Messen von insbesondere fadenförmigen, drahtförmigen, stangenförmigen oder röhrenförmigen Objekten mit einem telezentrischen Strahlengang und F-θ-Korrektur zu schaffen, bei dem ein relativ hoher Tastvorhang mit vergleichsweise wenigen, leichten und kleinen und dünnen Linsen realisierbar ist.

Diese Aufgabe ist durch die Erfindung dahingehend gelöst, daß ein Längenmeßgerät der eingangs genannten Art die im kennzeichnenden Teil des Anspruchs 1 genannten erfinderischen Merkmale aufweist.

Zur kontinuierlichen Messung beispielsweise der Dicke von strangförmigen Objekten durchlaufen diese einen Bereich, den sogenannten Tastbereich oder Tastvorhang, der von einem Lichtstrahl in einer Ebene durchlaufen wird, die senkrecht zur Laufrichtung des zu messenden Objekts liegt. Der diesen Tastbereich durchlaufende Vorhangsstrahl oder Taststrahl wird dabei nach Maßgabe der Geometrie des Strahles und der Abmessung des zu messenden Objekts für eine bestimmte Zeitspanne abgedeckt bzw. im Meßgerät hinter dem zu vermessenden Objekt abgeschattet. Die Dauer dieser Abschattung ist dann ein Maß für die Dicke des Strangguts.

Um auf diese Weise die lineare Größe der Dicke eines solchen strangförmigen Objektes ausreichend gut messen zu können, müssen eine Reihe von Bedingungen erfüllt sein.

a) der Strahldurchmesser muß klein genug sein, um eine steile Anstiegs- und Abfallszeit des Detektorsignals zu erhalten,

b) die Abtastgeschwindigkeit muß bezüglcih der Längsbewegung des Materials hoch und bezüglich seitlicher Bewegungen in der Abtastrichtung sehr hoch sein,

c) der Strahl muß vor und nach der Abschattungsperiode senkrecht zum Objekt sein,

d) die Bewegung des Objektes parallel zum Meßstrahl darf die Ablesung nicht beeinträchtigen,

e) die Abschattungszeit soll eine lineare Funktion des Durchmessers des Objektes sein, unabhängig von ihrer Stellung innerhalb der Abtastperiode, bzw. des Meßfeldes sein.

Die ersten drei Bedingungen können durch einen Laserstrahl erfüllt werden, der von einem Polygonspiegel reflektiert wird, der sich mit einer konstanten Geschwindigkeit dreht. Die Bedingungen d) und e) werden erfüllt, falls das Objektiv, das den Laserstrahl auf das Meßobjekt wirft, telezentrisch ausgebildet ist, d.h., falls der Hauptstrahl für alle Scanningwinkel parallel zur Achse bleibt. Die letzte Bedingung setzt voraus, daß das Objektiv F-θ-korrigiert ist, d.h., daß die Höhe des aus dem Objektiv austretenden Strahls eine lineare Beziehung zum Winkel des in das Objektiv eintretenden Strahls aufweist.

Können diese Bedingungen erfüllt werden, kann die Durchmesser-Messung durch eine einfache Messung der Abschattungsperiode durchgeführt werden, wodurch eine aufwendige digitale Berechnung entfällt.

Unter Berücksichtigung dieses Anforderungsprofils und dieser Parameter schafft die Erfindung ein Längenmeßgerät, das eine einfache und somit wirtschaftliche Bauweise des Geräts bei Verwendung kleinerer und leichterer Linsen ermöglicht. Die Lösung der Erfindung läuft dabei im wesentlichen darauf hinaus, für ein solches Längenmeßgerät ein katadioptrisches, telezentrisches F-θ-korrigiertes Objektiv zu verwenden. Dabei ist es die Verwendung von zwei reflektierenden Oberflächen in einem solchen Objektiv, die es ermöglicht, die Anzahl der im einzelnen benötigten Elemente und deren Abmessungen zu reduzieren, da die vorhandenen Elemente, vor allem also das Hohlspiegellinsenelement, zwei- oder sogar dreimal vom Laserstrahl durchquert werden, wobei ein und dasselbe Linsenelement, hier also insbesondere das Hohlspiegellinsenelement, bei jedem Durchlauf wie ein separates Linsenelement wirkt.

2

Wenn der Lichtstrahl also den Linsenkörper des Hohlspiegellinsenelements zweimal durchläuft, so ersetzt dieses eine Hohlspiegellinsenelement bei klassischer Bauweise des Objektivs zwei separate Linsen in zwei Gruppen.

Nach eine Ausgestaltung der Erfindung sind die Spiegellinsenelemente vorzugsweise nur teilverspiegelt und entweder gegen die optische Achse des Eintrittsstrahls verkippt, oder aber der Eintrittstrahl ist gegen die optische Achse des Objektivs geneigt, und zwar jeweils derart, daß der Lichtstrahl ohne Abdunklung durch die teilverspiegelten Bereiche durch die Spiegellinsenelemente läuft. Dadurch wird ein Intensitätsverlust, d.h. eine Verdunklng, des nutzbaren Taststrahls vermieden.

Die Erfindung ist im folgenden anhand von Ausführungsbeispielen in Verbindung mit den Zeichnungen näher erläutert. Es zeigen:

Fig. 1 in schematischer Darstellung ein Längenmeßgerät zum kontinuierlichen Messen des Durchmessers eines strangförmigen Gegenstandes;

Fig. 2 in vergrößertem Maßstab einen Schnitt nach II—II in Fig. 1;

Fig. 3 ein zweites Ausführungsbeispiel eines Objektivs gemäß de Erfindung;

Fig. 4 einen um 90° verlegten Schnitt durch das in Fig. 3 gezeigte Objektiv; und

Fig. 5 ein drittes Ausführungsbeispiel eines Objektivs gemäß der Erfindung.

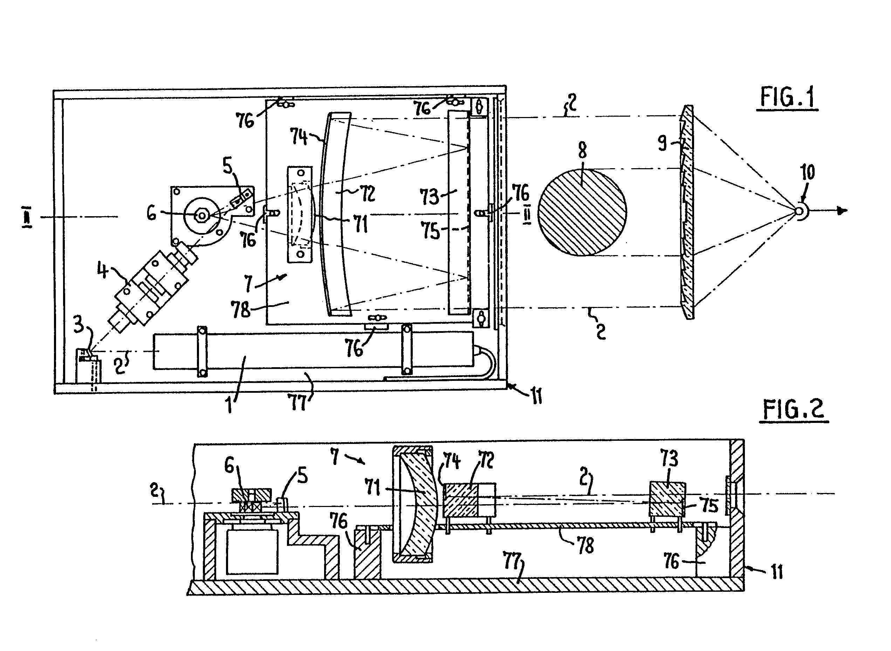

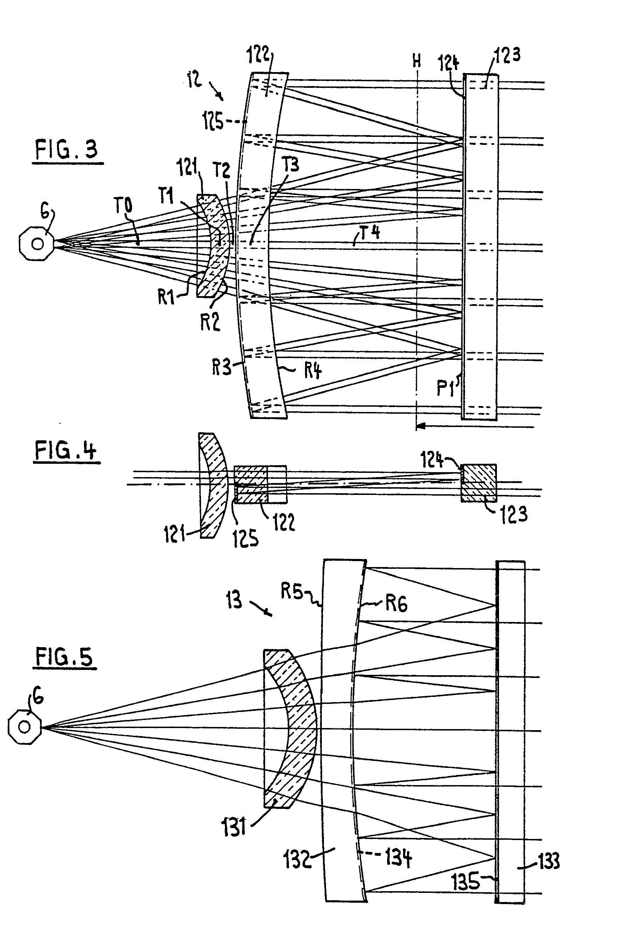

Fig. 1 zeigt schematisch einen möglichen Aufbau einer erfindungsgemässen Vorrichtung zum kontinuierlichen Erfassen einer Dimension, z.B. des Durchmessers eines Objektes, beispielsweise eines kontinuierlich hergestellten Stranges. Man erkennt einen Laser 1, beispielsweise einen Helium-Neon-Laser, dessen Strahl 2 von einem ersten Umlenkspiegel 3 durch eine Aufweitungsoptik 4 gelenkt wird, die den Strahl des Lasers auf einen Strahl von beispielsweise 4 mm Durchmesser aufweitet. Von der Aufweitungsoptik 4 gelangt der Strahl auf einen zweiten Umlenkspiegel 5 und von dort auf einen Polygonspiegel 6, der in bekannter Weise mit konstanter Drehgeschwindigkeit den Laserstrahl mit einer bestimmten Frequenz und mit einem bestimmten Winkel ablenkt. Es ist klar, dass weder die Anzahl und Anordnung der Umlenkspiegel noch die Anordnung der Aufweitungsoptik zwingend sind, sondern sich aus dem besonders kompakten Aufbau der Vorrichtung ergeben. Vom Drehspiegel 6 gelangt der Abtaststrahl durch das Objektiv 7, das in vorliegendem Beispiel aus drei Elementen 71, 72 und 73 besteht und weiter unten anhand der Figuren 3 und 4 ausführlicher beschrieben wird. Das optische Element 71 ist eine Meniskuslinse, das optische Element 72 ist ein Manginspiegel und das optische Element 73 ist eine planparallele Platte. Vom Objektiv gelangt der Strahl auf das zu messende Objekt 8 und von dort über eine Sammellinse, beispielsweise eine Fresnelzonenplatte 9 auf einen Fotoempfänger 10. Auf die an sich bekannte Auswertelektronik, die selbstverständlich mit dem Drehspiegel in Verbindung steht, wird im Rahmen dieser Erfindung nicht eingetreten.

Um zu verhindern, dass eine Abdunklung des Strahls erfolgt, können verschiedene Massnahmen vorgesehen werden. So kann man beispielsweise eine nur teilweise reflektierende Beschichtung durchführen oder man kann den optischen Strahl seitlich zur optischen Achse verschieben oder die reflektierenden Elemente leicht verkippen. Im Objektiv gemäss den Figuren 1 und 2 werden teilweise reflektierende Beschichtungen 74 auf Manginspiegel 72 und 75 auf der reflektierenden Platte 73 verwendet sowie ein leichtes Verkippen sowohl des Manginspiegels 72 als auch der reflektierenden Platte 73 um Sekunden resp. wenigen Minuten durchgeführt. Durch die Teilbeschichtung und die leichte Verkippung der reflektierenden Elemente kann eine Abdunklung des Strahls vermieden werden. Ausserdem ist zu diesem Ausführungsbeispiel zu bemerken, dass die Teilbeschichtung 75 an der reflektierenden Platte an der vom Drehspiegel aus gesehen hinteren Fläche dieser Platte angeordnet ist. In dieser Anordnung werden die optischen Elemente einzeln gefasst und mittels geeigneter Halterungen 76 auf einer justierbaren Platte 78 befestigt, die an der Bodenplatte 77 eines die ganze optische Anordnung umfassenden Gehäuses 11 gehalten ist.

In Fig. 3 ist ein bevorzugtes Ausführungsbeispiel eines telezentrischen, F-Theta-korrigierten Objektivs angegeben. Die optischen Elemente dieses Objektivs sind in herkömmlicher Weise in einer zentrierten Fassung gefasst, und, um einen abdunklungsfreien Abtastbereich zu erhalten, ist der Eingangsstrahl gegenüber der optischen Achse des Objektivs versetzt und abgewinkelt. Man erkennt den Drehspiegel 6, das erste optische Element, die Meniskuslinse 121, das zweite optische Element, der Manginspiegel 122 und das dritte optische Element, die ebene Platte 123. Die Meniskuslinse 121 weist eine erste brechende Fläche mit Radius R1 und eine zweite brechende Fläche mit dem Radius R2 auf. Der Manginspiegel weist eine erste, reflektierende Fläche mit Radius R3 und eine zweite Fläche mit Radius R4 auf, während bei diesem Ausführungsbeispiel die erste Fläche P1 des ebenen Spiegels 123 mit einer reflektierenden Schicht 125 versehen ist. Die reflektierende Schicht 124 erstreckt sich nur über einen Teil der ebenen Platte. Desgleichen ist die erste Fläche mit Radius R3 des Manginspiegels nicht vollständig mit einer reflektierenden Schicht 125 versehen. Wie aus Fig. 4 hervorgeht, erstrecken sich die reflektierenden Schichten 124 und 125, senkrecht zur Ebene von Fig. 3 betrachtet, über die Hälfte der beiden in Frage kommenden Flächen. Die verschiedenen Abstände, resp. Dicken, die für, die Berechnungen der Elemente des Objektives wichtig sinds, sind mit T0, T1, T2, T3 und T4 angegeben. Die Dicke der ebenen Platte 123 spielt in vorliegendem Beispiel keine Rolle. Der Strahlengang ist aus Fig. 3 ohne weiteres ersichtlich:

Der beispielsweise durch einen Umlenkspiegel (5 in Fig. 1) gegenüber der optischen Achse des Objektivs versetzte und geneigte Lichtstrahl gelangt vom Drehspiegel durch das Meniskuskorrekturelement, durchläuft den durchlässigen Bereich des Manginspiegels und wird von der reflektierenden Schicht 124 auf der Fläche P1 der ebenen Platte 123 reflektiert, gelangt durch den Manginspiegel an die reflektierende Fläche 125 mit Radius R3 und wird durch den Manginspiegel auf und durch die ebene Platte 123 geworfen und verlässt das Objektiv als telezentrischer, F-Theta-korrigierter Strahl, um auf das Messobjekt zu fallen. In den nachfolgenden Tabellen 1 und 2 wird jeweils ein Bereich für die für die Berechnung massgebenden Werte angegeben, innerhalb welchem ein telenzentrischer und F-Theta-korrigierter Strahl erreicht werden kann, der die erforderlichen Eigenschaften aufweist, um die gewünschte Dimension des zu messenden Objektes schnell und mit grosser Genauigkeit bestimmen zu können. Die genauen Werte hängen dann unter anderem vom verwendeten Glas ab.

TABELLE 1 (Konstruktionsdaten)

| Krümmungs-radius | Dicke oder Abstand | Brechungs-Index | Halbmesser Apertur |
|---|---|---|---|
| Eingangsöffnung | | | .0087 |
| | $0,20 < T0 < 0,275$ | | |
| $-0,150 < R1 < -0,105$ | | | .0708 |
| | $0,032 < T1 < 0,040$ | $1,48 < n1 < 1,55$ | |
| $-0,185 < R2 < -0,155$ | | | .0818 |
| | $0,005 < T2 < 0,008$ | | |
| $1,40 < R3^* < 1,90$ | | | .0897 |
| | $0,04 < T3 < 0,06$ | $1,48 < n3 < 1,55$ | |
| $1,05 < R4 < 1,50$ | | | .0981 |
| | $0,25 < T4 < 0,35$ | | |
| P1** eben | | | .1785 |
| Austrittsöffnung | | | .2771 |

\* Mangin-Spiegel-Fläche, durchlässig für den ersten Strahleneintritt
\*\* Zweiter Spiegel, reflektierend für den ersten Strahlenauftritt

Die Längeneinheit ist die Brennweite des Objektivs.

TABELLE 2 (optische Daten)

| | |
|---|---|
| Wellenlänge des Lichtes | 0,6328 µm |
| Oeffnungsverhältnis | F/115 |
| Feldwinkel | +/− 15 Grad |
| Abtasthöhe | +/− 0,261926 |
| Brennweite | 1,000 |
| Versetzungs-Abstand Eingangsstrahl | 0,021827 |
| Verwendeter Glastyp | 517642*) |
| Theoretischer Linearitätsfehler | $+/- 2,043 \cdot 10^{-5}$ |

*) Glas BK 7 — 517642 Fa. Schott, Mainz

Im Rahmen eines solchen Objektivs ist es auch möglich, anstatt einer relativ stark gekrümmten Meniskuslinse, zwei Meniskuslinsen zu verwenden.

In Fig. 5 ist ein einfacheres Objektiv angegeben, das ebenfalls telezentrisch, F-Theta-korrigiert und katadioptrisch ist. Das Objektiv 13 setzt sich aus einer Meniskuslinse 131, einem oberflächenverspiegelten Spiegel 132 und einer ebenfalls oberflächenverspiegelten ebenen Platte 133 zusammen. Die Beschichtungen 134 auf dem Spiegel 132 und 135 auf der ebenen Platte 133 sind wie im vorhergehenden Beispiel nur teilweise ausgeführt, um eine Verdunkelung des Strahls zu vermeiden. Auch hier können entweder der beschichtete Spiegel 132 und die eben Platte 133 gegenüber dem Strahlengang geneigt sein oder die Elemente können konventionell zentriert gehalten und der Strahl versetzt und geneigt durch das Objektiv geführt sein. Die Werte für dieses Objektiv bewegen sich im Rahmen von Tabelle 1, mit Ausnahme der Werte für den reflektierenden Spiegel 132, da ihn die Strahlen nur einmal durchlaufen. Die Werte für R5 können sich zwischen 6,5 und 8,5 bewegen und die Werte von R6 zwischen 1,5 und 2,0.

Es ist aber auch möglich, im Rahmen dieser Erfindung anstatt ein oder zwei auch mehrere Meniskuslinsen zu verwenden und anstatt einer ebenen Platte eine ebenfalls gekrümmte Platte resp. Spiegel zu verwenden. Wie aus den Fig. 1, 3 und 5 hervorgeht, kann die ebene Platte resp. gekrümmte Spiegel auf der vorderen oder hinteren Fläche verspiegelt sein. Falls statt einer ebenen Platte ein gekrümmter Spiegel verwendet wird und dieser auf der zweiten Fläche verspiegelt ist, ändern sich selbstverständlich die entsprechenden Werte für die übrigen optischen Elemente. Die Beschichtungen der Spiegel erfolgen mit üblichen Aufdampfverfahren oder auf chemischen Wege. Wie aus den Fig. 2 und 4 hervorgeht, handelt es sich beim Spiegelelement und bei der ebenen Platte um rechteckige Streifen, doch können es selbstverständlich auch kreisrunde Spiegel, bzw. Platten sein. Ebenso ist es auch möglich, die Meniskuslinse anders als rund auszuführen.

Während es sich im Vorhergehenden ausschliesslich um sphärische, resp. ebene Elemente handelt, ist es auch möglich, statt dessen ein Objektiv mit zylinderoptischen Elementen aufzubauen, um so einen Ausgangsstrahl zu erhalten, der im wesentlichen in einer Ebene liegt, welches auch für die Auswertung Vorteile erbringt.

## Patentansprüche

1. Längenmeßgerät zur eindimensionalen optischen Abtastung eines Zu vermessenden Prüflings (8) mit einer Vorrichtung zur Erfassung der Abschattungsdauer des Taststrahls unter Verwendung eines Objektivs, in dessen Brennpunkt ein mit konstanter Geschwindigkeit rotierendes Spiegelrad (6) angeordnet ist, dadurch gekennzeichnet, daß als Objektiv ein aus einem Meniskus (71; 121; 131), einer Hohlspiegellinse (72; 122; 132) und einem der Hohlspiegellinse gegenüberstehendem Spiegel (75; 124; 135) bestehendes optisches System verwendet wird, bei dem, bezogen auf die optische Achse des Objektivs, für alle Ablenkwinkel des Eintrittsstrahls die Höhe des Mittelstrahls des aus dem Objektiv austretenden Taststrahls im Bildraum eine lineare Funktion des Ablenkwinkels des Eintrittsstrahls ist.

2. Längenmeßgerät nach Anspruch 1, dadurch gekennzeichnet, daß die Hohlspiegellinse ein Manginspiegel (122) ist.

3. Längenmeßgerät nach einem der Ansprüche 1 oder 2, dadurch gekennzeichnet, daß der Spiegel (75; 124; 135) als Spiegellinsenelement (73, 75; 123, 124; 133, 135) ausgebildet ist, dessen beide Oberflächen den Krümmungsradius "unendlich" aufweisen, so daß der Linsenkörper dieses Spiegellinsenelements also eine planparallele Platte ist.

4. Längenmeßgerät nach den Ansprüchen 2 und 3, gekennzeichnet durch den folgenden Satz Parameter für das Objektiv:

| Krümmungs-radius | Dicke oder Abstand | Brechungs-Index |
|---|---|---|
| Eingangsöffnung | | |
| | $0,20 < T0 < 0,275$ | |
| $-0,150 < R1 < -0,105$ | | |
| | $0,032 < T1 < 0,040$ | $1,48 < n1 < 1,55$ |
| $-0,185 < R2 < -0,155$ | | |
| | $0,005 < T2 < 0,008$ | |
| $1,40 < R3* < 1,90$ | | |
| | $0,04 < T3 < 0,06$ | $1,48 < n3 < 1,55$ |
| $1,05 < R4 < 1,50$ | | |
| | $0,25 < T4 < 0,35$ | |
| P1** eben | | |

&ast; Mangin-Spiegel-Flächen durchlässig für den ersten Strahleneintritt
&ast;&ast; Zweiter Spiegel, reflektierend für den ersten Strahlenauftritt

5. Längenmeßgerät nach einem der Ansprüche 1 oder 3, dadurch gekennzeichnet, daß der Spiegel (74; 125; 134) der Hohlspiegellinse (72, 74; 122, 125; 132, 134) ein sphärischer Spiegel ist.

6. Längenmeßgerät nach Anspruch 1, dadurch gekennzeichnet, daß das Objektiv aus zylinderoptischen Elementen aufgebaut ist.

7. Längenmeßgerät nach einem der Ansprüche 1 bis 6, dadurch gekennzeichnet, daß die Spiegellinsenelemente nur teilverspiegelt sind.

8. Längenmeßgerät nach Anspruch 7, dadurch gekennzeichnet, daß die Spiegellinsenelemente gegen die Achse des Eingangsstrahls so verkippt sind, daß im Zusammenwirken mit der Teilverspiegelung der aus dem Objektiv austretende Taststrahl gegenüber dem Eingangsstrahl nicht abgedunkelt ist.

9. Längenmeßgerät nach Anspruch 7, dadurch gekennzeichnet, daß alle optischen Elemente des Objektivs zentriert angeordnet sind und daß der auf das Objektiv auftreffende Strahl gegenüber der Objektivachse so versetzt und geneigt ist, daß in Verbindung mit der Teilverspiegelung der

**EP 0 211 803 B1**

Spiegellinsenelemente eine Abdunklung des aus dem Objektiv als Taststrahl austretenden Strahls gegenüber dem Eingangsstrahl vermieden wird.

10. Längenmeßgerät nach einem der Ansprüche 1 bis 9, gekennzeichnet durch einen Helium-Neon-Laser (1), zwei einstellbaren Ablenkspiegeln (3, 5) und eine zwischen den beiden Ablenkspiegeln angeordnete Aufweitungsoptik (4), die den Laserstrahl als Eingangsstrahl auf den Drehspiegel (6) leiten, wobei sämtliche genannten Elemente in einem Gehäuse (11) angeordnet sind.

## Revendications

1. Dispositif de mesure de la longueur pour l'exploration optique unidimensionnelle d'une ébauche (8) à mesurer, comportant un dispositif de mesure de la durée d'occultation du rayon de mesure en utilisant un objectif au foyer duquel est disposée une roue à miroirs (6) tournant à une vitesse constante, caractérisé en ce que l'on utilise comme objectif un système optique se composant d'un ménisque (71; 121; 131), d'un miroir-lentille concave (72; 122; 132) et d'un miroir (75; 124; 135) confronté au miroir-lentille concave, système dans lequel, par rapport à l'axe optique de l'objectif, pour tous les angles de déviation du rayon entrant, la hauteur du rayon central du rayon de mesure sortant de l'objectif, dans l'espace de représentation, est une fonction linéaire de l'angle de déviation du rayon entrant.

2. Dispositif de mesure de la longueur selon la revendication 1, caractérisé en ce que le miroir-lentille concave est un miroir de Mangin (122).

3. Dispositif de mesure de la longueur selon l'une des revendications 1 et 2, caractérisé en ce que le miroir (75; 124; 135) est réalisé sous la forme d'un élément à miroir-lentille (73; 75; 123, 124; 133, 135), dont les deux surfaces présentent le rayon de courbure "infini", de sorte que le corps de lentille de cet élément à miroir-lentille est ainsi une plaque plane parallèle.

4. Dispositif de mesure de la longueur selon les revendications 2 et 3, caractérisé par le jeu suivant de paramètres pour l'objectif:

| Rayon de courbure | Epaisseur ou distance | Indice de réfraction |
|---|---|---|
| Ouverture d'entrée | | |
| | $0,20 < T0 < 0,275$ | |
| $-0,150 < R1 < -0,105$ | | |
| | $0,032 < T1 < 0,040$ | $1,48 < n1 < 1,55$ |
| $-0,185 < R2 < -0,155$ | | |
| | $0,005 < T2 < 0,008$ | |
| $1,40 < R3* < 1,90$ | | |
| | $0,04 < T3 < 0,06$ | $1,48 < n3 < 1,55$ |
| $1,05 < R4 < 1,50$ | | |
| | $0,25 < T4 < 0,35$ | |
| P1** plan | | |

\* Surfaces de miroir de Mangin transparentes pour la première entrée du rayon

\*\* Deuxième miroir, réfléchissant pour la première entrée du rayon.

5. Dispositif de mesure de la longueur selon l'une des revendications 1 ou 3, caractérisé en ce que le miroir (74; 125; 134) du miroir-lentille concave (72, 74; 122, 125; 132, 134) est un miroir sphérique.

6. Dispositif de mesure de la longueur selon la revendication 1, caractérisé en ce que l'objectif est construit à partir d'éléments optiques cylindriques.

7. Dispositif de mesure de la longueur selon l'une des revendications 1 à 6, caractérisé en ce que les éléments de miroir-lentille ne sont que partiellement réfléchissants.

8. Dispositif de mesure de la longueur selon la revendication 7, caractérisé en ce que les éléments de miroir-lentille sont basculés vis-à-vis de l'axe du rayon d'entrée, de telle façon qu'en coopération avec le réfléchissement partiel, le rayon de mesure sortant de l'objectif n'est pas occulté vis-à-vis du rayon d'entrée.

9. Dispositif de mesure de la longueur selon la revendication 7, caractérisé en ce que tous les éléments optiques de l'objectif sont centrés et que le rayon arrivant sur l'objectif est décalé et incliné, par rapport à l'axe de l'objectif, de façon à éviter, en liaison avec le réfléchissement partiel, des éléments de lentilles à miroir, une occultation du rayon émergeant de l'objectif comme rayon d'exploration vis-à-vis du rayon d'entrée.

10. Dispositif de mesure de la longueur selon l'une des revendications 1 à 9, caractérisé par un laser hélium-argon (1), deux miroirs de déviation réglables (3, 5) et une optique d'agrandissement (4), disposée entre les deux miroirs de déviation et dirigeant sur le miroir tournant (6) le rayon laser servant de rayon d'entrée, l'ensemble des éléments cités étant disposé dans un boîtier (11).

6

# EP 0 211 803 B1

**Claims**

1. A measuring device for measuring the length of an object (8) by 1-dimensionally optically scanning, comprising means for detecting the duration of the shadow period of the scanning beam by means of an objective, wherein a polygonal mirror (6) rotating with a constant velocity is arranged in the focal point of said objective, characterized in that the objective is an optical system comprising a meniscal lens (71; 121; 131), a concave mirror-lens (72; 122; 132) and a mirror (75; 124; 135) arranged opposite the concave mirror-lens, wherein, with respect to the optical axis of the objective, the height of the central beam of the scanning beam emerging from the objective is for all deflection angles of the incident beam within the image space a linear function of said deflection angle of the incident beam.

2. A measuring device according to claim 1, characterized in that the concave mirror-lens is a MANGIN-type mirror (122).

3. A measuring device according to claim 1 or 2, characterized in that the mirror (75; 124; 135) is a mirror-lens element (73, 75; 123, 124; 133, 135), wherein both surfaces of said element comprise an infinite radius of curvature so that the lens body of said mirror-lens element is a plate with parallel faces.

4. A measuring device according to claims 2 and 3, characterized by the following objective parameters:

| radius of curvature | thickness or distance | refractive index |
|---|---|---|
| entrance opening | | |
| | $0,20 < T0 < 0,275$ | |
| $-0,150 < R1 < -0,105$ | | |
| | $0,032 < T1 < 0,040$ | $1,48 < n1 < 1,55$ |
| $-0,185 < R2 < -0,155$ | | |
| | $0,005 < T2 < 0,008$ | |
| $1,40 < R3* < 1,90$ | | |
| | $0,04 < T3 < 0,06$ | $1,48 < n3 < 1,55$ |
| $1,05 < R4 < 1,50$ | | |
| | $0,25 < T4 < 0,35$ | |
| P1** eben | | |

\* MANGIN mirror surface, transmissive for the first entry of the beam
\*\* Second mirror, reflecting for the first incidence of the beam

5. A measuring device according to one of the claims 1 or 3, characterized in that the mirror (74; 125; 134) of the concave mirror-lens (72, 74; 122, 125; 132, 134) is a spherical mirror.

6. A measuring device according to claim 1, characterized in that the objective is constructed by cylindrical optical elements.

7. A measuring device according to one of the claims 1 to 6, characterized in that the mirror-lens elements are only partially reflecting.

8. A measuring device according to claim 7, characterized in that the mirror-lens elements are tilt with respect to the axis of the incident beam so that, in combination with the partially reflecting behaviour, the scanning beam emerging from the lens is not darkened with respect to the incident beam.

9. A measuring device according to claim 7, characterized in that all optical elements of the objective are centered and that the beam impinging the objective is inclined with respect to the axis of the objective so that, in combination with the partially reflecting behaviour of the mirror-lens elements, the darkening of the beam emerging as a scanning beam from the objective with respect to the incident beam is prevented.

10. A measuring device according to one of the claims 1 to 9, characterized by a helium-neon-laser (1), two adjustable deflecting mirrors (3, 5) and an optical system for expanding the laser beam arranged between the deflecting mirrors, which optical systems transmits the laser beam as incident beam to the rotating mirror (6), wherein all of the above parts are located inside a housing (11).

7

FIG.1

FIG.2

FIG. 3

FIG. 4

FIG. 5